# EUROPÄISCHE PATENTANMELDUNG

(11) **EP 1 387 194 A2**
(43) Veröffentlichungstag der Anmeldung: **04.02.2004**
(21) Anmeldenummer: 03017395.9
(22) Anmeldetag: 31.07.2003
(51) Int. Cl.: G02B 6/255, G02B 27/09, B23K 26/073

(54) **Verfahren und Vorrichtung zum Spleissen von Lichtwellenleitern**

(30) Priorität: 31.07.2002 DE 10234946
(71) Anmelder: CCS Technology, Inc., Wilmington, DE 19803 (US)
(72) Erfinder: Ruegenberg, Gervin, 80689 München (DE)
(74) Vertreter: Epping Hermann & Fischer

(57) **Zusammenfassung**

In einem Verfahren zum Spleißen von Lichtwellenleitern wird ein Laserstrahl (16) zum thermischen Spleißen von zwei Lichtwellenleitern (10, 11) auf die Lichtwellenleiter gerichtet und trifft in einem Fokussierungsbereich (28) auf die Lichtwellenleiter. Der Laserstrahl (16) wird zur Positionierung des Fokussierungsbereichs (28) des Laserstrahls mittels einer diffraktiv wirkenden optischen Anordnung (18) fokussiert, die die Form des Laserstrahls im Fokussierungsbereich beeinflusst. Die Strahlform und damit die Leistungsverteilung im Fokus kann durch die Gestaltung der diffraktiv wirkenden optischen Anordnung in weiten Grenzen an die individuellen Bedingungen der Spleißanordnung angepaßt werden. Hierdurch kann eine weitgehende Unabhängigkeit der Erwärmung der Lichtwellenleiter von deren Position innerhalb des Fokus erreicht werden.

## Beschreibung

Die vorliegende Erfindung betrifft ein Verfahren zum Spleißen von Lichtwellenleitern, wobei ein Laserstrahl zum thermischen Spleißen von zwei Lichtwellenleitern auf die Lichtwellenleiter gerichtet wird und in einem Fokussierungsbereich auf die Lichtwellenleiter trifft. Weiterhin betrifft die vorliegende Erfindung eine Vorrichtung zum Spleißen von Lichtwellenleitern mit einem Laser zum thermischen Spleißen von zwei Lichtwellenleitern sowie einer optischen Anordnung zum Fokussieren eines von dem Laser ausgestrahlten Laserstrahls.

Bei einem Verfahren zum thermischen Verspleißen von Lichtwellenleitern werden im allgemeinen zu verbindende Glasfasern durch eine Wärmequelle auf Schmelztemperatur erwärmt und dabei in Kontakt gebracht. Heutige Spleißgeräte benutzen in der Regel eine elektrische Glimmentladung als Energiequelle für den Spleißvorgang. Während des Spleißvorgangs befinden sich die zu verspleißenden Lichtwellenleiter in einer Einflußzone dieser Glimmentladung und werden dadurch auf Schmelztemperatur erwärmt. Für die Qualität der erreichten Spleißverbindung sind, neben anderen Parametern, sowohl die Intensität der Erwärmung der Lichtwellenleiter als auch die Größe der Erwärmungszone von Bedeutung.

Aus US 4 263 495 A ist ein Verfahren bekannt, bei dem anstelle der Glimmentladung ein Laser als Energiequelle verwendet wird. Bei diesem Verfahren wird eine Fokussierung des Laserstrahls vorgenommen, um eine ausreichende Leistungsdichte zu erhalten. Die Strahlung des Lasers wird durch Linsen beziehungsweise Kombinationen aus Linsen und Spiegeln so gebündelt, daß sich ein Fokussierungsbereich, in dem die Strahlung auf die Lichtwellenleiter trifft, mit erhöhter Leistungsdichte ergibt. Die zu verspleißenden Glasfasern werden in diesem Fokussierungsbereich, auch Fokus genannt, angeordnet, so daß die gewünschte Erwärmung der Lichtwellenleiter erzielt wird.

In der Praxis ist die Lage der Lichtleitfasern im Spleißgerät gewissen Toleranzen unterworfen. Diese werden durch die Eigenschaften der Fasern selbst (zum Beispiel Eigenkrümmung), Verschmutzung der Faserhalter und durch Gerätetoleranzen verursacht. Aufgrund dieser Toleranzen kann es nun vorkommen, daß der fokussierte Laserstrahl die Faser nicht oder nur teilweise trifft. In diesem Fall ist die Fasererwärmung unzureichend, so daß schlechte Spleißergebnisse die Folge sind. In der Anwendung handelt es sich tatsächlich zunächst um zwei getrennte Fasern, die dann zu einer einzigen Faser verbunden werden. Alle folgenden Überlegungen beziehen sich sinngemäß sowohl auf die beiden noch nicht verschweißten Fasern als auch auf die durch den Spleißvorgang entstehende Faser.

Wird zur Fokussierung des Laserstrahls eine Linsenanordnung verwendet, so ergibt sich im allgemeinen ein runder Leuchtfleck beziehungsweise Fokus, bei dem die Leistungsdichte in der Mitte am höchsten ist und nach außen hin abnimmt. Wenn in dieser Anordnung die Fasern nun aufgrund von mechanischen Toleranzen nicht ganz in der Mitte des Fokus liegen, wird die Überschneidung von Fasern und Fokus geringer. Zudem befindet sich die Faser dann in einem Bereich des Fokus mit geringerer Leistungsdichte. Beides hat zur Folge, daß die auf die Faser auftreffende Gesamtleistung deutlich abnimmt. Dies bedeutet, daß die Fasererwärmung stark von der Lage der Faser abhängt. Mit der beschriebenen Anordnung kann somit nicht sichergestellt werden, daß die gewünschte Fasererwärmung, wie sie für den Spleißvorgang optimal wäre, auch tatsächlich erreicht wird. Vielmehr haben schon relativ geringe Verschiebungen der Faserlagen gegenüber der Idealposition eine erhebliche Verringerung der Fasererwärmung durch den Laser zur Folge. Dies führt zu unzureichender Fasererwärmung und damit zu schlechten Spleißergebnissen.

Dieses Problem könnte dadurch gelöst werden, daß Fokus und Fasern immer exakt aufeinander ausgerichtet werden. Hierzu kann entweder der Fokus so verschoben werden, daß er die Fasern exakt trifft, oder aber die Fasern werden beide so ausgerichtet, daß sie sich innerhalb des Fokussierungsbereichs befinden. Beides erfordert einen hohen Zusatzaufwand. Eine zusätzliche Schwierigkeit ist, daß die tatsächliche Position des Fokus wegen der vergleichsweise großen Wellenlänge der Laserstrahlung im unsichtbaren Bereich nur schwer zu erfassen ist.

Ein einfacherer zu realisierender Lösungsansatz besteht darin, den Laserstrahl weniger stark zu bündeln, um einen größeren Fokussierungsbereich zu erhalten. Als Folge davon ändert sich bei einer Verschiebung der Faser die auftreffende Strahlungsleistung entsprechend weniger stark. Somit wird die Abhängigkeit zwischen Fasererwärmung und Lage der Fasern geringer. Allerdings verringert sich auch der Wirkungsgrad der Anordnung, weil sich die vom Laser abgestrahlte Leistung auf eine größere Fläche verteilt, wodurch ein entsprechend geringerer Anteil auf die Fasern trifft und von diesen absorbiert wird. Um dennoch eine ausreichende Fasererwärmung zu erzielen, wird daher ein leistungsfähigerer und teurerer Laser benötigt. Weiterhin nimmt durch die Vergrößerung des Fokus auch die Größe der Erwärmungszone in Längsrichtung der Fasern zu, was zu einer verstärkten Deformation der Fasern in diesem Bereich führt und damit eine erhöhte Spleißdämpfung zur Folge hat. Aus diesen genannten Gründen ist nur eine vergleichsweise geringe Vergrößerung des Fokussierungsbereichs sinnvoll. Die gewünschte Unabhängigkeit der Fasererwärmung von der Position der Fasern wird in diesem Fall nur ansatzweise erreicht.

Die Aufgabe der vorliegenden Erfindung ist es, ein Verfahren zum Spleißen von Lichtwellenleitern anzugeben, durch das eine weitgehende Unabhängigkeit der Erwärmung der zu verspleißenden Lichtwellenleiter von deren Position innerhalb des Fokus erreichbar ist.

Weiterhin ist es Aufgabe der vorliegenden Erfindung, eine entsprechende Vorrichtung zum Spleißen von Lichtwellenleitern anzugeben.

Die Aufgabe betreffend das Verfahren wird gelöst durch ein Verfahren gemäß Patentanspruch 1. Die Aufgabe betreffend die Vorrichtung wird gelöst durch eine Vorrichtung gemäß Patentanspruch 8.

Erfindungsgemäß wird beim Verfahren der eingangs genannten Art der Laserstrahl zur Positionierung des Fokussierungsbereichs des Laserstrahls mittels einer diffraktiv wirkenden optischen Anordnung fokussiert, um die Form des Laserstrahls im Fokussierungsbereich zu beeinflussen. Der große Vorteil besteht darin, daß die Strahlform und damit die Leistungsverteilung im Fokus durch die Gestaltung der diffraktiv wirkenden optischen Anordnung beziehungsweise deren optischer Komponenten in weiten Grenzen an die individuellen Bedingungen der Spleißanordnung angepaßt werden kann. Insbesondere ist mit Hilfe der diffraktiv wirkenden optischen Anordnung ermöglicht, den Laserstrahl derart zu fokussieren, daß innerhalb des Fokussierungsbereichs ein Leistungsdichteprofil der Strahlung im wesentlichen homogen ist, das heißt, daß innerhalb des Fokus eine weitestgehend konstante Leistungsdichte herrscht.

Besonders vorteilhaft wird der Laserstrahl derart fokussiert, daß der Fokussierungsbereich linienartige Begrenzungen aufweist, die in Teilbereichen einen im wesentlichen geraden Verlauf haben. Es kann somit ein linienförmiger Fokus mit nahezu konstanter Leistungsdichte erzeugt werden. Der Fokussierungsbereich, also der Bereich höchster Leistungsdichte, hat insbesondere an sich schon die Form einer Linie mit einer gewissen Breite und einer bestimmten Länge.

Die erfindungsgemäße Vorrichtung zum Spleißen von Lichtwellenleitern weist dementsprechend eine optische Anordnung zum Fokussieren des vom Laser ausgestrahlten Laserstrahls auf, wobei die optische Anordnung ein diffraktiv wirkendes optisches Element enthält, das die Form des Laserstrahls im Fokussierungsbereich beeinflusst. Die Wirkungsweise eines diffraktiv wirkenden optischen Elements beruht auf der Beugung von Lichtwellen an feinen Strukturen.

Die Beugung von Lichtwellen wird dabei vorteilhaft mit einer Lichtbrechung, beispielsweise durch eine Linse, kombiniert. Dementsprechend weist die optische Anordnung in einer vorteilhaften Ausführungsform eine Linse und eine im Strahlengang vor- oder nachgeordnete Gitterstruktur auf. Beispielsweise wird eine Linse vorgesehen, bei der zusätzlich eine Gitterstruktur auf die Oberfläche aufgebracht ist. Durch die Gitterstruktur wird zusätzlich zur Lichtbrechung durch die Linse eine gezielte Beugung erreicht. Derartige Bauteile sind relativ kostengünstig herstellbar.

Die Ausdehnung des Fokussierungsbereichs des Laserstrahls entlang der Lichtwellenleiter wird vorteilhaft derart festgelegt, daß die Erwärmungszone die gewünschte Breite aufweist. Durch die Verwendung einer diffraktiv wirkenden optischen Anordnung zur Fokussierung des Laserstrahls ist dies in weiten Grenzen möglich, ohne die Ausdehnung des Fokus quer zur Lichtwellenleiterachse nachteilig zu vergrößern.

Die Erfindung kann sowohl in Verbindung mit einem feststehenden Fokussierungsbereich des Laserstrahls als auch in Verbindung mit einem Fokussierungsbereich angewendet werden, der entlang der Lichtwellenleiterachse bewegt wird. Entsprechend wird in einer Weiterbildung der Erfindung zur Beeinflussung des Leistungsdichteprofils der Strahlung in Längsrichtung der Lichtwellenleiter eine Position des Fokussierungsbereichs in Längsrichtung der Lichtwellenleiter verändert. Insbesondere wird der Fokussierungsbereich in einem vorbestimmten Bereich um eine Spleißstelle der Lichtwellenleiter herum periodisch verschoben. In diesem Fall wird die Breite der Erwärmungszone durch eine periodische Bewegung, sogenanntes Scannen, des Laserstrahls gesteuert. Hierzu ist es vorteilhaft, daß die Ausdehnung des Fokussierungsbereichs in Richtung der Lichtwellenleiterachse möglichst gering ist. Daher wird die diffraktiv wirkende optische Anordnung bevorzugt so ausgelegt, daß die Breite des Fokussierungsbereichs so gering wie möglich wird. Mit dieser Ausführungsform der Erfindung ist es vorteilhaft ermöglicht, das Leistungsdichteprofil der auftreffenden Laserstrahlung beliebig zu beeinflussen und damit optimal an die Anforderungen anzupassen.

Mit der Erfindung werden die Nachteile der einleitend beschriebenen Lösungsansätze vermieden. Die Position der Lichtwellenleiter hat keinen nennenswerten Einfluß mehr auf deren Erwärmung. Weiterhin kann die Breite des Fokussierungsbereichs unabhängig davon derart gewählt werden, wie es für die jeweilige Spleißanordnung optimal ist. Da die Leistung des Lasers nur auf den tatsächlich interessierenden Spleißbereich fokussiert wird, genügt ein verhältnismäßig leistungsschwacher und damit kostengünstiger Laser zur Anwendung in einer Spleißvorrichtung.

Weitere vorteilhafte Aus- und Weiterbildungen der Erfindung sind in Unteransprüchen angegeben.

Die Erfindung wird im folgenden anhand der in der Zeichnung dargestellten Figuren näher erläutert. Es zeigen:
- Figur 1: eine schematisch dargestellte Spleißanordnung und das zugehörige Leistungsdichteprofil der Laser- strahlung im Fokussierungsbereich nach dem Stand der Technik,
- Figur 2: ein weiteres schematisch dargestelltes Leistungs- dichteprofil einer Laserstrahlung im Fokussierungsbereich nach dem Stand der Technik,
- Figur 3: eine schematisch dargestellte Spleißanordnung und das zugehörige Leistungsdichteprofil der Laser- strahlung im Fokussierungsbereich gemäß der Erfindung,
- Figur 4: eine Ausführungsform einer erfindungsgemäßen Spleißanordnung,
- Figur 5: eine weitere Ausführungsform einer erfindungsgemäßen Spleißanordnung,
- Figur 6: Kurven zur Verdeutlichung der Bewegung eines Laserstrahl-Fokussierungsbereichs und Kurven zur Verdeutlichung des sich auf den zu verspleißenden Lichtwellenleitern einstellenden Leistungsdichteprofils.

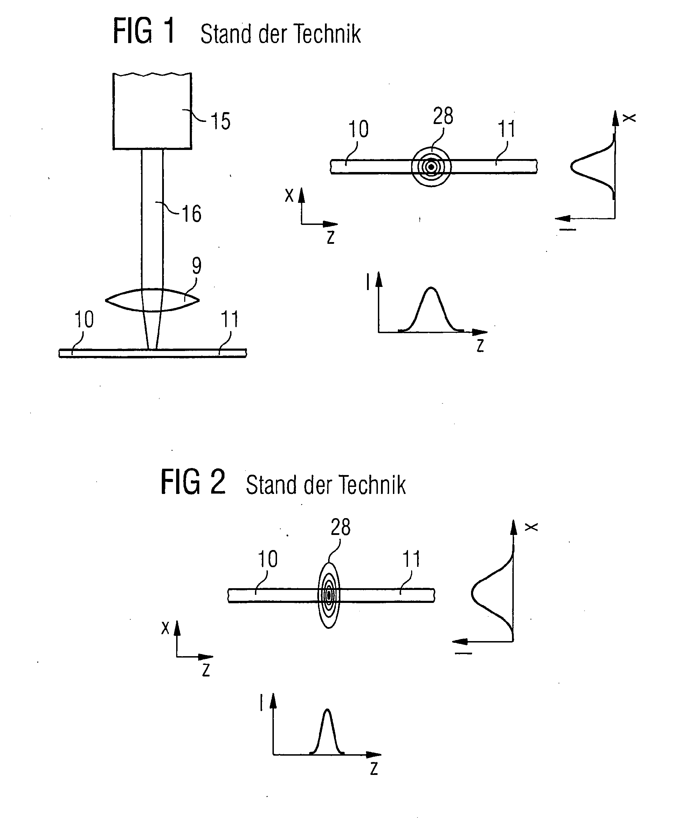

In Figur 1 ist eine schematisch dargestellte Spleißanordnung und das zugehörige Leistungsdichteprofil der Laserstrahlung im Auftreffbereich dargestellt. Als Energiequelle für den Spleißvorgang ist ein Laser 15 vorgesehen, der einen Laserstrahl 16 ausstrahlt. Der Laserstrahl 16 trifft auf eine Linse 9 und wird so in Richtung auf die zu verspleißenden Lichtwellenleiter 10, 11 gelenkt. Die Fokussierung ist so gewählt, daß sich die Lichtleitfasern nicht exakt an der Position der schärfsten Strahlbündelung befinden. Im rechten Teil der Figur 1 sind schematisch die Lichtwellenleiter 10 und 11 sowie der Fokussierungsbereich 28 in der Faserebene dargestellt. Es ergibt sich ein.runder Fokussierungsbereich beziehungsweise Leuchtfleck 28, bei dem die Leistungsdichte in der Mitte am höchsten ist und nach außen hin abnimmt. Dieser Sachverhalt ist durch die Kreise im Inneren des Leuchtflecks angedeutet, deren Dichte von Innen nach Außen hin abnimmt.

Weiterhin ist in Figur 1 ein Koordinatensystem bestehend aus x-Achse und z-Achse dargestellt. Die z-Achse verläuft parallel zur Faserachse, die x-Achse senkrecht dazu. Die beiden dargestellten Kurven in Figur 1 zeigen die Verteilung der Leistungsdichte I innerhalb des Fokussierungsbereichs 28 in x- und in z-Richtung.

Wenn die Fasern 10 und 11 nun aufgrund von mechanischen Toleranzen nicht ganz in der Mitte des Fokussierungsbereichs 28 liegen, wird die Überschneidung von Fasern und Fokussierungsbereich geringer. Zudem befinden sich die Fasern dann in einem Bereich des Fokussierungsbereichs mit geringerer Leistungsdichte. Beides hat zur Folge, daß die auf die Fasern auftreffende Gesamtleistung deutlich abnimmt. Daraus resultiert eine erhebliche Verringerung der Fasererwärmung, was insbesondere zu schlechten Spleißergebnissen führt.

In Figur 2 ist die Form eines Fokus und dessen Leistungsdichteverteilung in x- und in z-Richtung für eine Spleißanordnung dargestellt, bei der der Laserstrahl unter Verwendung von Zylinderlinsen zu einem länglichen Leuchtfleck gebündelt wird, wobei die größte Ausdehnung des Leuchtflecks senkrecht zur Faserachse steht. Auch bei einer derartigen Fokussierung ist die Fasererwärmung von der exakten Position der Faser zum Fokus abhängig, da auch der längliche Leuchtfleck keine gleichförmige Leistungsverteilung aufweist. Vielmehr nimmt auch hier die auf die Faser auftreffende Leistung zu den Rändern des Leuchtflecks hin ab. Das prinzipielle Problem, daß die auf die Fasern beziehungsweise auf die Spleißstelle einwirkende Leistung von der Lage der Fasern relativ zum Fokus abhängt, kann auch bei dieser Anordnung nur auf Kosten des Wirkungsgrades der Anordnung vermindert, aber nicht beseitigt werden.

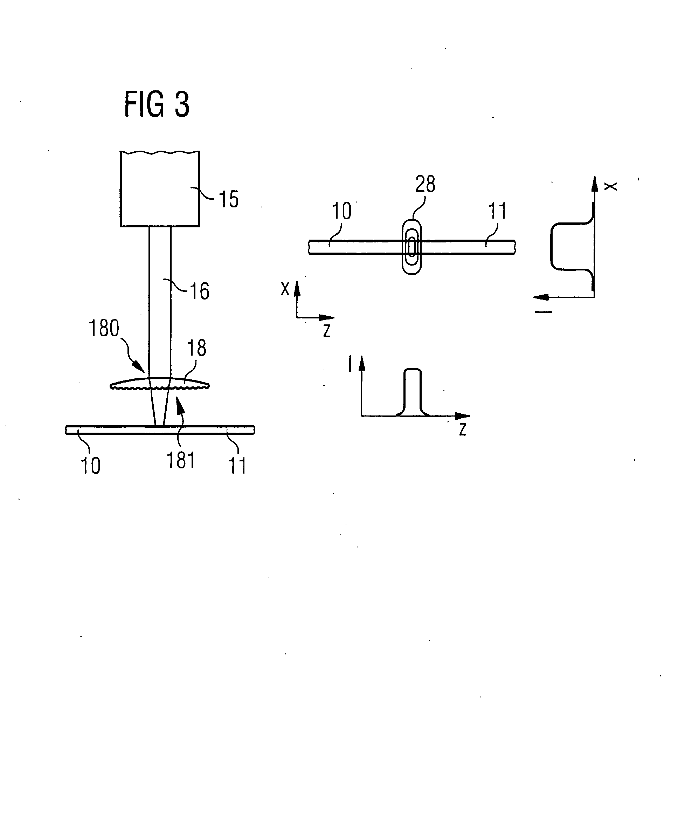

In Figur 3 ist eine schematisch dargestellte, erfindungsgemäße Spleißanordnung und das zugehörige Leistungsdichteprofil der Strahlung im Auftreffbereich auf die Lichtwellenleiter gezeigt. Der Laserstrahl 16 des Lasers 15 trifft auf eine diffraktiv wirkende optische Anordnung 18, die zur Fokussierung des Laserstrahls 16 dient. Hierbei wird der Laserstrahl 16 durch eine Linse 180 mit zusätzlich auf die Oberfläche aufgebrachter Gitterstruktur 181 fokussiert. Hierbei kann die Gitterstruktur der Linse im Strahlengang vor- oder nachgeordnet sein. Durch die Gitterstruktur wird zusätzlich zur Lichtbrechung durch die Linse eine gezielte Beugung erreicht. Derartige Bauteile sind relativ kostengünstig herstellbar.

Der große Vorteil der diffraktiv wirkenden optischen Anordnung besteht darin, daß die Strahlform und damit die Leistungsverteilung im Auftreffbereich der Strahlung auf die Lichtwellenleiter durch die Gestaltung des Gitters in weiten Grenzen an die Problemstellung angepaßt werden kann. Insbesondere ist es ermöglicht, einen Fokussierungsbereich beziehungsweise Leuchtfleck zu erzeugen, innerhalb dessen eine weitestgehend konstante Leistungsdichte herrscht, das heißt das Leistungsdichteprofil der Strahlung im wesentlichen homogen ist. Es kann somit ein linienförmiger Fokus mit nahezu konstanter Leistungsdichte erzeugt werden. Der gemäß der Anordnung nach Figur 3 erzeugte Fokussierungsbereich 28 weist nicht die insbesondere in Figur 2 erkennbare eliptische Form auf, sondern weist linienartige Begrenzungen auf, die in Teilbereichen einen im wesentlichen geraden Verlauf haben. Die linienartigen Begrenzungen des Fokussierungsbereichs 28 mit im wesentlichen geradem Verlauf sind quer zu der Längsachse der Lichtwellenleiter 10 und 11 ausgerichtet und schließen die Lichtwellenleiter in ihrem Durchmesser ein. Der Fokussierungsbereich 28 weist in Querrichtung der Lichtwellenleiter 10 und 11 eine größere Ausdehnung auf, als in Längsrichtung der Lichtwellenleiter.

Die Leistungsdichte I innerhalb des Fokussierungsbereichs 28 ist fast bis zum Rand desselben konstant. Durch die besondere Gestaltung des Fokussierungsbereichs 28 wird erreicht, daß die Lichtwellenleitererwärmung in einem weiten Bereich unabhängig von der x-Position des Lichtwellenleiters ist. Dieser muß sich lediglich im homogenen Teil des Fokussierungsbereichs befinden. Dies wird durch die Erfindung erreicht, ohne daß der Fokussierungsbereich wesentlich größer sein muß als der Bereich, in dem sich die Faser befinden kann.

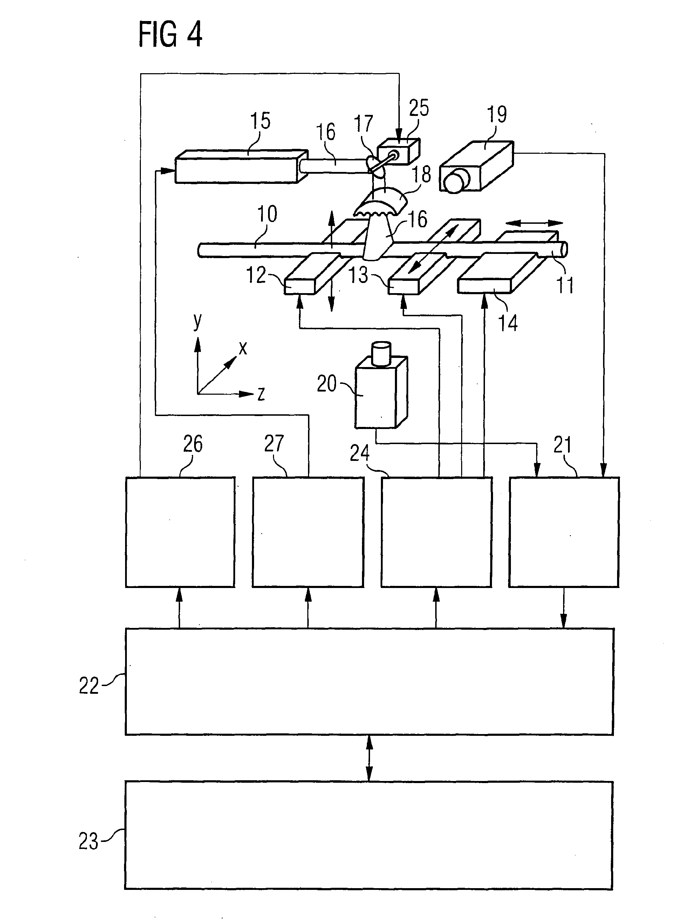

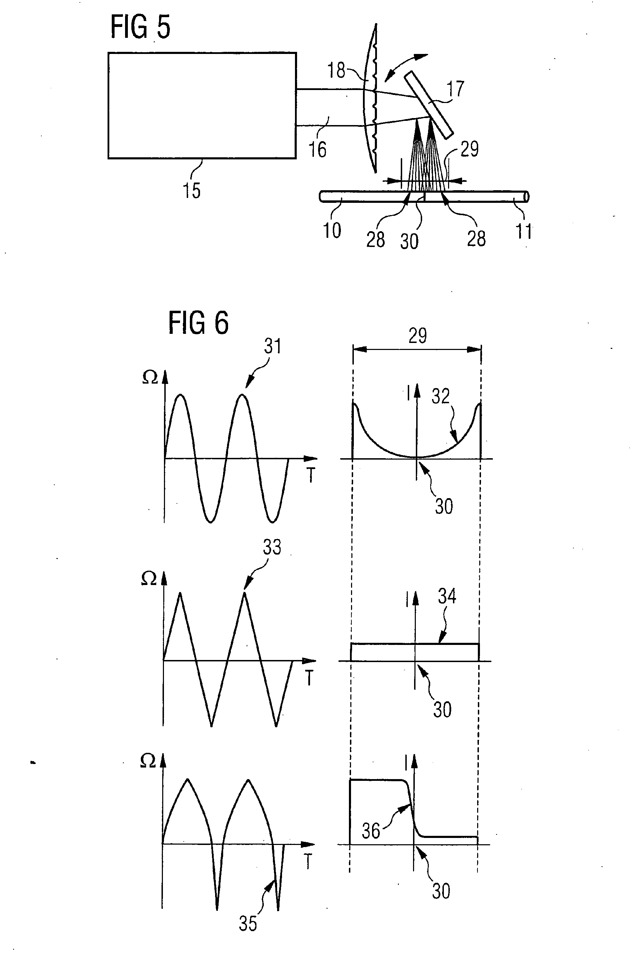

Im folgenden wird unter Bezugnahme auf die Figuren 4 und 5 der Aufbau einer erfindungsgemäßen Vorrichtung zum Spleißen von Lichtwellenleitern erläutert. Gemäß Figur 4 sind zwei miteinander zu verspleißende Lichtwellenleiter 10, 11 auf Positionierelementen 12, 13, 14 angeordnet, die eine räumliche Ausrichtung der Lichtwellenleiter 10 und 11 in drei jeweils senkrecht zueinander verlaufenden Achsen ermöglichen. Der Lichtwellenleiter 11 ist auf den Positionierelementen 13 und 14 angeordnet, die den Lichtwellenleiter 11 in einer in etwa horizontal verlaufenden, von der x-Achse sowie z-Achse aufgespannten Ebene verschieben können. Der andere Lichtwellenleiter 10 ist auf dem Positionierelement 12 angeordnet. Über dieses ist der Lichtwellenleiter 10 in der y-Achse verschiebbar, die senkrecht zu der x-Achse und z-Achse verläuft. Hierdurch lassen sich die miteinander zu verspleißenden Lichtwellenleiter 10 und 11 für den Spleißvorgang exakt zueinander ausrichten.

Als Energiequelle für den Spleißvorgang ist ein Laser 15 vorgesehen, der den Laserstrahl 16 ausstrahlt. Der Laserstrahl 16 trifft auf einen Spiegel 17 und wird so in Richtung auf die zu verspleißenden Lichtwellenleiter 10 und 11 gelenkt. Anstelle des Spiegels 17 können auch andere bewegliche optische Komponenten verwendet werden. Es kommen insbesondere nicht-rotationssymmetrische optische Bauteile, wie zum Beispiel transparente Prismen oder Quader in Betracht. Das Prinzip lässt sich auch mit anderen Spiegelformen (zum Beispiel Polygonspiegel) realisieren.

Zur Fokussierung des Laserstrahls 16 ist eine diffraktiv wirkende optische Anordnung 18 vorgesehen, die in Form einer Linse mit zusätzlich auf die Oberfläche aufgebrachter Gitterstruktur ausgeführt ist. Durch die Gitterstruktur wird zusätzlich zur Lichtbrechung durch die Linse eine gezielte Beugung erreicht. Die diffraktiv wirkende Linse 18 ist im Strahlengang des Laserstrahls entweder dem Spiegel 17 nachgeordnet (Figur 4) oder dem Spiegel vorgeordnet (Figur 5). Als Laser kommt vorzugsweise ein CO2-Laser zum Einsatz.

Die Position der miteinander zu verspleißenden Lichtwellenleiter 10 und 11 und der Spleißvorgang werden von Kameras 19 und 20 überwacht. Die Kameras 19, 20 leiten die ermittelten Signale an eine Erfassungseinrichtung 21 weiter, welche die Signale auswertet und an eine Zentralsteuereinrichtung 22 weiterleitet. Diese ist ihrerseits mit einer Bedien- und Anzeigeeinrichtung 23 verbunden, damit der Benutzer den Spleißvorgang überwachen und durch Eingabe von Steuerbefehlen beziehungsweise Spleißparametern gegebenenfalls beeinflussen kann. Die Zentralsteuereinrichtung 22 dient der Steuerung beziehungsweise Regelung des gesamten Spleißvorgangs. Sie verarbeitet die von der Erfassungseinrichtung 21 weitergeleiteten Daten. Ist zum Beispiel eine Veränderung der räumlichen Ausrichtung der miteinander zu verspleißenden Lichtwellenleiter 10, 11 erforderlich, so gibt die Zentralsteuereinrichtung 22 Steuersignale an eine Lagesteuereinrichtung 24 weiter, die mit allen drei Positionierelementen 12, 13 und 14 verschaltet ist. Hierdurch erfolgt dann eine Veränderung der räumlichen Ausrichtung der miteinander zu verspleißenden Lichtwellenleiter 10 und 11.

Gemäß einer vorteilhaften Weiterbildung des erfindungsgemäßen Gedankens ist zur Gewährleistung eines optimalen Spleißprozesses das Temperaturprofil beziehungsweise das Leistungsdichteprofil entlang der Achse der Lichtwellenleiter 10 und 11 unabhängig von der aufgebrachten Leistung des Lasers 15 völlig frei wählbar. Hierzu ist dem Spiegel 17 eine Antriebseinrichtung 25 zugeordnet, mit Hilfe derer der Spiegel 17 in seiner Position verändert werden kann. Gemäß der Figuren 4 und 5 ist der Spiegel 17 schwenkbar. Zur Steuerung der Schwenkbewegung des Spiegels 17 ist der Antriebseinrichtung 25 eine Antriebssteuerungseinrichtung 26 zugeordnet. Diese ist mit der Zentralsteuereinrichtung 22 verschaltet. Weiterhin ist eine Lasersteuereinrichtung 27 vorhanden, mit Hilfe derer die Leistung des Lasers 15 beeinflußt werden kann. Die Lasersteuereinrichtung 27 ist einerseits mit der Zentralsteuereinrichtung 22 und andererseits mit dem Laser 15 verschaltet.

Das mit den Anordnungen nach Figuren 4 und 5 vorteilhaft realisierbare Spleißverfahren wird nachfolgend unter weiterer Bezugnahme auf Figur 6 näher beschrieben.

Wie anhand von Figur 5 dargestellt, wird der Fokussierungsbereich 28, innerhalb dessen der Laserstrahl auf die Lichtwellenleiter 10 und 11 trifft, in Längsrichtung der zu verspleißenden Lichtwellenleiter durch Änderung der Position des Spiegels 17 verändert. Der Fokussierungsbereich 28 wird dabei in einem vorbestimmten Bereich 29 um eine Spleißstelle 30 der zu verspleißenden Lichtwellenleiter 10 und 11 herum verschoben. Vorzugsweise wird der Fokussierungsbereich 28 in dem vorbestimmten Bereich 29 periodisch verschoben, wobei eine Frequenz für das Verschieben derart bemessen ist, daß eine Periodendauer für das Verschieben des Fokussierungsbereichs 28 wesentlich kürzer ist, als die thermische Zeitkonstante der zu verspleißenden Lichtwellenleiter 10 und 11. Damit wird sichergestellt, daß die Lichtwellenleiter im gesamten Bewegungsbereich des Fokussierungsbereiches quasi gleichzeitig erwärmt werden. Eine bevorzugte Frequenz für die Bewegung des Spiegels 17 liegt zwischen 50 Hz und 500 Hz. Der Spiegel 17 wird mittels der Antriebseinrichtung 25 gemäß Figur 4 bewegt, die periodische Beeinflussung der Bewegung wird durch die Antriebssteuerungseinrichtung 26 gesteuert.

Zur Modulation der Bewegung beziehungsweise der Geschwindigkeit der Bewegung des Spiegels 17 beziehungsweise des Fokussierungsbereichs 28 wird die Antriebseinrichtung 25 mit einer Kurvenform angesteuert, die für das gewünschte Erwärmungsprofil beziehungsweise Leistungsdichteprofil sorgt. Die Leistung des Lasers 15 wird dabei konstant gehalten, kann aber vorzugsweise auch variabel moduliert werden. In Bereichen mit langsamer Bewegung des Spiegels 17 wirkt im Mittel ein höherer Anteil der Laserleistung als in Bereichen mit schneller Bewegung desselben. Daher werden in diesen Bereichen die Lichtwellenleiter stärker erwärmt.

Figur 6 zeigt dies anhand von drei Beispielen. Bei einer sinusförmigen Bewegung Ω des Spiegels 17 über der Zeit T gemäß Kurve 31 ist bei konstanter Leistung des Lasers 15 die Leistungsdichte an den Rändern der Bewegung im Bereich 29 am größten, weil dort wegen der Umkehr der Bewegungsrichtung die Bewegung des Spiegels 17 am langsamsten ist. Als Leistungsdichteprofil I der mittleren Laserleistung ergibt sich die in der Kurve 32 dargestellte "Badewannenkurve". Das zweite Beispiel zeigt in der Kurve 33 eine dreiecksförmige Bewegung Ω des Spiegels 17. Dies führt bei konstanter Leistung des Lasers 15 zu einem gleichmäßigen Leistungsdichteprofil I über der Achse der miteinander zu verspleißenden Lichtwellenleiter 10, 11 (Kurve 34). Eine bevorzugte Lösung ist in diesem Zusammenhang, den Spiegel gleichmäßig (zum Beispiel entsprechend einer zeitlichen Dreiecksfunktion) zu bewegen und synchron die Laserleistung entsprechend dem gewünschten Temperaturprofil zu steuern.

Im dritten Beispiel - siehe Kurven 35 und 36 - ist gezeigt, wie durch eine entsprechende Modulation der Spiegelbewegung Ω ein willkürlich gewähltes Leistungsdichteprofil I erreicht wird. Ein linker Lichtwellenleiter wird hier deutlich stärker erwärmt als der rechte Lichtwellenleiter, weil in diesem Bereich die Spiegelbewegung langsamer ist. Ein solches unsymmetrisches Leistungsdichteprofil I ist insbesondere dann vorteilhaft, wenn die beiden miteinander zu verspleißenden Lichtwellenleiter unterschiedliche Eigenschaften, zum Beispiel stark unterschiedliche Außendurchmesser aufweisen. Zur Modulation der Bewegung des Fokussierungsbereiches wird demnach bei einer vorgegebenen konstanten Frequenz für das Verschieben des Fokussierungsbereiches ein Kurvenverlauf der Bewegung des Fokussierungsbereiches beziehungsweise des Spiegels verändert.

Die Erfindung kann sowohl in Verbindung mit einem feststehenden Fokus als auch in Verbindung mit einem Fokus angewendet werden, der entlang der Faserachse periodisch bewegt wird. Hier sollte die Ausdehnung des Fokus in Richtung der Faserachse möglichst gering sein. In ersterem Fall wird der bewegliche Spiegel durch einen feststehenden Spiegel ersetzt.

Das erfindungsgemäße Verfahren kann in gleicher Weise auch zum gleichzeitigen Spleißen mehrerer zu einem Bändchen zusammengefaßter Lichtwellenleiter verwendet werden. In diesem Fall ist der Fokussierungsbereich so gestaltet, daß derselbe die Breite des gesamten Bändchens abdeckt. Das erfindungsgemäße Verfahren kann auch zum Spleißen von Lichtwellenleitern an optische Bauteile (etwa Chips wie zum Beispiel sogenannte Wellenlängenmultiplexer, Koppler etc.) verwendet werden. Beim Spleißen von Lichtwellenleitern an optische Bauteile ist sozusagen einer der zu verspleißenden Lichtwellenleiter ein Lichtwellenleiter im optischen Bauteil. Da dieser eine wesentlich größere Wärmekapazität und Wärmeableitung aufweist als der andere Lichtwellenleiter, ist in diesem Fall die Anwendung eines unsymmetrischen Leistungsdichteprofils I gemäß Kurve 36 von besonderem Interesse.

Es ist grundsätzlich auch möglich, anstelle nur eines Laserstrahls auch mehrere Laserstrahlen zu verwenden. Hierzu kann beispielsweise der Laserstrahl mittels eines Strahlteilers in zwei Teilstrahlen aufgeteilt werden, die beide auf die Lichtwellenleiter gelenkt werden. In diesem Fall kann die Erfindung in gleicher Weise angewendet werden. Hierbei ist ein in der Praxis wichtiger Aspekt, zwei Laser-Teilstrahlen von im wesentlichen gegenüberliegenden Seiten zu verwenden, um eine bezüglich der Faserachse symmetrische Erwärmung zu erzielen.

## Patentansprüche

1. Verfahren zum Spleißen von Lichtwellenleitern, bei dem ein Laserstrahl (16) zum thermischen Spleißen von zwei Lichtwellenleitern (10, 11) auf die Lichtwellenleiter gerichtet wird und in einem Fokussierungsbereich (28) auf die Lichtwellenleiter trifft,
**dadurch gekennzeichnet, daß**
der Laserstrahl (16) zur Positionierung des Fokussierungsbereichs (28) des Laserstrahls mittels einer diffraktiv wirkenden optischen Anordnung (18) fokussiert wird, um die Form des Laserstrahls im Fokussierungsbereich (28) zu beeinflussen.

2. Verfahren nach Anspruch 1,
**dadurch gekennzeichnet, daß**
der Laserstrahl (16) derart fokussiert wird, daß innerhalb des Fokussierungsbereichs (28) ein Leistungsdichteprofil (I) der Strahlung im wesentlichen homogen ist.

3. Verfahren nach Anspruch 1 oder 2,
**dadurch gekennzeichnet, daß**
der Laserstrahl (16) derart fokussiert wird, daß der Fokussierungsbereich (28) linienartige Begrenzungen aufweist, die in Teilbereichen einen im wesentlichen geraden Verlauf haben.

4. Verfahren nach Anspruch 3,
**dadurch gekennzeichnet, daß**
der Laserstrahl (16) derart fokussiert wird, daß die linienartigen Begrenzungen mit im wesentlichen geradem Verlauf quer zu einer Längsachse der Lichtwellenleiter (10, 11) verlaufen und die Lichtwellenleiter einschließen.

5. Verfahren nach einem der Ansprüche 1 bis 4,
**dadurch gekennzeichnet, daß**
der Laserstrahl (16) derart fokussiert wird, daß der Fokussierungsbereich (28) in Querrichtung der Lichtwellenleiter (10, 11) eine größere Ausdehnung als in Längsrichtung der Lichtwellenleiter aufweist.

6. Verfahren nach einem der Ansprüche 1 bis 5,
**dadurch gekennzeichnet, daß**
zur Beeinflussung eines Leistungsdichteprofils (I) der Strahlung in Längsrichtung der Lichtwellenleiter (10, 11) eine Position des Fokussierungsbereichs (28) in Längsrichtung der Lichtwellenleiter verändert wird.

7. Verfahren nach Anspruch 6,
**dadurch gekennzeichnet, daß**
der Fokussierungsbereich (28) in einem vorbestimmten Bereich (29) um eine Spleißstelle (30) der Lichtwellenleiter (10, 11) herum verschoben, insbesondere periodisch verschoben wird.

8. Verfahren nach einem der Ansprüche 1 bis 7,
**dadurch gekennzeichnet, daß**
zwei Laser-Teilstrahlen von im wesentlichen gegenüberliegenden Seiten verwendet werden, um eine bezüglich der Lichtwellenleiterachse symmetrische Erwärmung zu erzielen.

9. Vorrichtung zum Spleißen von Lichtwellenleitern mit einem Laser (15) zum thermischen Spleißen von zwei Lichtwellenleitern (10, 11) und mit einer optischen Anordnung (18) zum Fokussieren eines von dem Laser ausgestrahlten Laserstrahls (16),
**dadurch gekennzeichnet, daß**
die optische Anordnung (18) ein diffraktiv wirkendes optisches Element (180, 181) aufweist, das die Form des Laserstrahls in einem Fokussierungsbereich (28), in welchem der Laserstrahl auf die Lichtwellenleiter trifft, beeinflusst.

10. Vorrichtung nach Anspruch 9,
**dadurch gekennzeichnet, daß**
die optische Anordnung eine Linse (180) und eine im Strahlengang vor- oder nachgeordnete Gitterstruktur (181) aufweist.

11. Vorrichtung nach Anspruch 9 oder 10,
**dadurch gekennzeichnet, daß**
- die Vorrichtung eine optische Komponente (17) aufweist, um den Laserstrahl (16) auf die zu verspleißenden Lichtwellenleiter (10, 11) zu richten,
- die Vorrichtung eine Antriebseinrichtung (25) für die optische Komponente (17) aufweist, wobei die optische Komponente mit Hilfe der Antriebseinrichtung derart bewegbar ist, daß eine Position eines Fokussierungsbereichs (28) des Laserstrahls (16), innerhalb dessen die Strahlung auf die Lichtwellenleiter (10, 11) trifft, in Längsrichtung derselben verschiebbar ist.

12. Vorrichtung nach Anspruch 11,
**dadurch gekennzeichnet, daß**
der Antriebseinrichtung (25) eine Antriebssteuerungseinrichtung (26) zur periodischen Beeinflussung der Bewegung des Fokussierungsbereichs (28) zugeordnet ist.

13. Vorrichtung nach einem der Ansprüche 9 bis 12,
**dadurch gekennzeichnet, daß**
dem Laser (15) eine Lasersteuereinrichtung (27) zur Beeinflussung einer Intensität des Laserstrahls (16) zugeordnet ist.
